Europäisches Patentamt

European Patent Office

Office européen des brevets

(11) Veröffentlichungsnummer: **0 285 863**
**A1**

(12) **EUROPÄISCHE PATENTANMELDUNG**

(21) Anmeldenummer: 88104069.5

(22) Anmeldetag: 15.03.88

(51) Int. Cl.⁴ **F16L 13/06**

(30) Priorität: 02.04.87 CH 1273/87

(43) Veröffentlichungstag der Anmeldung:
**12.10.88 Patentblatt 88/41**

(84) Benannte Vertragsstaaten:
**DE ES FR IT SE**

(71) Anmelder: **GEBRÜDER SULZER
AKTIENGESELLSCHAFT
Zürcherstrasse 9
CH-8401 Winterthur(CH)**

(72) Erfinder: **Fricker, Hans
Breitestrasse 22 Sulz
CH-8544 Rickenbach-Attikon(CH)**

(74) Vertreter: **Dipl.-Ing. H. Marsch Dipl.-Ing. K.
Sparing Dipl.-Phys.Dr. W.H. Röhl
Patentanwälte
Rethelstrasse 123
D-4000 Düsseldorf(DE)**

(54) Verfahren zum Herabsetzen von Restspannungen in einer Schweissnaht.

(57) Das Verfahren zur Herabsetzung von Restspannungen in einer Schweissnaht (20) und in der während des Schweissens thermisch beanspruchten Zone eines metallischen Hohlkörpers (10) besteht darin, dass auf den Hohlkörper (10) eine ringartige Laschenkette (30) aufgespannt wird, die an mindestens einem Zapfen (33) einen Exzenter (33') aufweist, und dass durch Drehen des Exzenters (33') die Laschenkette (30) soweit angezogen wird, dass eine gewünschte Druckspannung in der Zone erzeugt wird.

Fig.2

EP 0 285 863 A1

## Verfahren zum Herabsetzen von Restspannungen in einer Schweissnaht

Die Erfindung betrifft ein Verfahren nach dem Oberbegriff des Anspruchs 1.

Ein solches Verfahren wird in der Druckschrift "Nuclear Engineering International", November 1986, Seite 56 bis 58 beschrieben. Bei dem bekannten Verfahren werden die mechanischen Druckspannungen durch Anwendung eines zweiteiligen Spaltringes erzeugt, dessen Innenfläche der Aussenfläche des Hohlkörpers angepasst ist, wobei die Spalte zwischen den beiden Teilen des Spaltringes mittels Schraubenbolzen auf das erforderliche Mass verkleinert werden. Zum Einhalten dieses Masses werden Beilegscheiben in die Spalte gelegt.

Nachteile des bekannten Verfahrens bestehen insbesondere darin, dass die Form und die Abmessungen des Spaltringes genau denjenigen des Hohlkörpers unter den erzeugten Druckspannungen entsprechen müssen, damit andere als die durch das Verfahren gewünschten Verformungen des Hohlkörpers vermieden werden. Wenn beispielsweise der Hohlkörper ein kreiszylindrisches Rohr ist, muss vermieden werden, dass dieses Rohr elliptisch verformt wird. Dieses bedingt eine sehr genaue und daher aufwendige und kostspielige Herstellung des Spaltringes, der ausserdem nur für eine ganz bestimmte Hohlkörperform und -grösse verwendbar ist.

Der bekannte Spaltring ist ein an sich steifes Gebilde, das keine Anpassungsmöglichkeiten an kleine Formabweichungen bietet. Deshalb wird bei dem bekannten Verfahren zwischen den Spaltring und den Hohlkörper ein plastisch verformbarer Zwischenring eingelegt, der kleine Formabweichungen zwischen der Innenfläche des Spaltringes und der Aussenfläche des Hohlkörpers ausgleicht und damit eine Vergleichmässigung der Belastung gewährleistet. Nach jeder Verwendung des Spaltringes muss der verbrauchte Zwischenring durch einen neuen ersetzt werden, was die Kosten des Verfahrens zusätzlich erhöht.

Die Aufgabe der Erfindung besteht darin, das bekannte Verfahren so zu verbessern, dass seine Anwendung mit geringerem Montageaufwand und kostengünstig möglich ist.

Diese Aufgabe wird mit Hilfe der im kennzeichnenden Teil des Anspruchs 1 angegebenen Massnahmen gelöst.

Hierbei wird eine an sich aus dem schweizerischen Patentgesuch 669/84-5 bekannte Laschenkette zum Erzeugen der mechanischen Druckspannungen verwendet.

Die Laschenkette besteht aus einer Reihe von miteinander verbundenen Zapfen und Laschen, so dass ihre Länge durch entsprechende Wahl der Anzahl Zapfen und Laschen oder der Stellungen der Exzenter innerhalb weiter Grenzen einstellbar ist. Es ist hierdurch möglich, mit einer einzigen Laschenkette in Hohlkörpern von verschiedenen Grössen und Formen die erforderlichen Druckspannungen zu erzeugen. Ein Anpassen an kleine Formabweichungen oder -fehler ist hierbei auf einfache Weise möglich. Ein plastisch verformbarer Zwischenring erübrigt sich, wobei ein Einklemmen von wiederverwendbaren Zwischenstücken zwischen Laschenkette und Hohlkörper gemäss Anspruch 6 auf günstige Weise eine bessere Belastungsverteilung ermöglicht.

Die Ansprüche 2 bis 5 geben verschiedene Möglichkeiten an, das Verfahren nach der Erfindung ohne nennenswerten, mechanischen Kraftaufwand auszuführen.

Weitere Vorteile der Erfindung ergeben sich aus der folgenden Beschreibung eines anhand der Zeichnung dargestellten Ausführungsbeispieles.

Hierbei zeigt:

Fig. 1 in schematischer Darstellung die Ansicht eines Teiles eines rohrförmigen Hohlkörpers, auf dem eine den Hohlkörper umgreifende Laschenkette zum Erzeugen von Druckspannungen angeordnet ist.

Fig. 2 ein Detail längs der Schnittlinie II-II in einem grösseren Massstab und

Fig. 3 einen Schnitt längs der Schnittlinie III-III der Fig. 2.

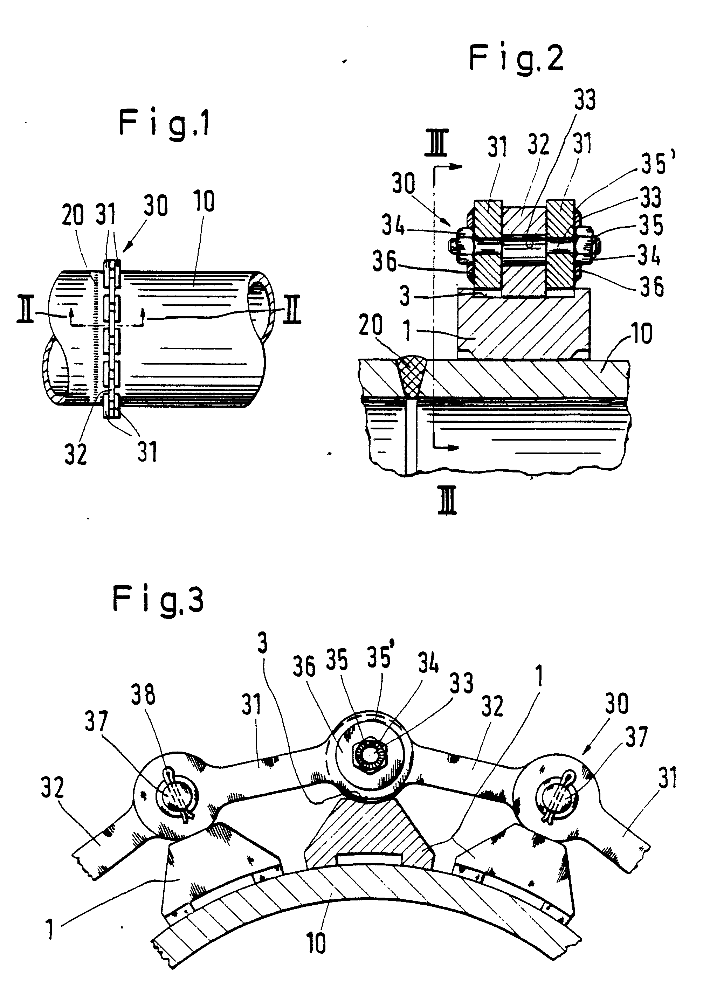

Gemäss Fig. 1 und 2 weist ein Rohr 10 eine in Umfangsrichtung verlaufende Schweissnaht 20 auf. Auf einer Seite der Schweissnaht 20 ist eine während des Schweissens thermisch beanspruchte oder beeinflusste Zone des Rohres 10 von einer geschlossenen Laschenkette 30 umspannt, wobei zwischen der Laschenkette 30 und dem Rohr 10 segmentförmige Zwischenstücke 1 angeordnet sind. Die Laschenkette 30 besteht aus äusseren Laschen 31 und inneren Laschen 32, die mittels Zapfen 33, 37 gelenkig zusammengehalten sind. Jeder zweite Zapfen 33 weist im Bereich der inneren Lasche 32 einen Exzenter 33' und an jedem Ende eine Zapfenmutter 34 auf. Nach dem Zusammensetzen der Laschenkette 30 werden die Zapfenmuttern 34 mittels Befestigungsschweissnähten 35 fest mit den Zapfen 33 verbunden. So kann die Laschenkette 30 einfach durch Drehen der Zapfen 33 und der entsprechenden, damit verbundenen Exzenter 33' sehr stramm angezogen und nach Erreichen einer gewünschten Kettenspannung mit Hilfe von Fixierscheiben 36 in ihrer Lage gesichert werden. Dazu weist jede Fixierscheibe 36 in ihrer Mitte ein sechseckiges Loch auf, das eng auf die Zapfenmutter 34 passt, so dass die Fixierscheiben 36 über die Zapfenmutter 34 geschoben und mittels Befestigungsschweissnähten 35' an den äusseren Laschen 31 befestigt werden können. Die Zwischenstücke 1 sind mit je einer Mulde 3 versehen, in der sich die Laschenkette 30 abstützt.

Die Zapfen 37, die keinen Exzenter aufweisen, sind mittels je zwei Splinten 38 in der Laschenkette 30 fixiert.

Durch eine geeignete Wahl der Anzahl Laschen 31, 32 und der Stellung der Exzenter 33', kann die Länge der Laschenkette 30 innerhalb weiter Grenzen variiert werden, um ihre Verwendung bei Rohren 10 mit sehr unterschiedlichen Durchmessern zu gewährleisten. Die Einstellbarkeit der Laschenkette 30 kann zusätzlich dadurch vergrössert werden, dass anstelle mindestens eines Teiles der exzenterlosen Zapfen 37, Zapfen 33 mit Exzentern 33' verwendet werden.

Zum Herabsetzen von Restspannungen in der Schweissnaht 20 und in der von ihr während des Schweissens thermisch beanspruchten Zone wird nun die Laschenkette 30 so verspannt, dass in dieser Zone mechanische Druckspannungen erzeugt werden, die kleiner als die Druck-Bruchfestigkeit des Rohres 10 in dieser wärmebeeinflussten Zone sind, jedoch eine Verformung über die Streckgrenze hinaus bewirken. Die Zwischenstücke 1 bewirken hierbei ein Vergleichmässigen der Druckspannungen.

Um eine grosse kräftemässige Beanspruchung der Zapfenmuttern 34 zu reduzieren, wenn die Druckspannungen allein durch Verdrehen der mit den Exzentern 33' versehenen Zapfen 33 erzeugt werden sollen, ist es vorteilhaft, die Laschenkette 30 zuerst zu erwärmen, beispielsweise durch induktive Heizung, sodann durch Drehen der mit den Exzentern 33' versehenen Zapfen 33 die erwünschten Druckspannungen zu erzeugen und dann die Kette und die von ihr umgebene Zone, vorzugsweise durch einfache Wärmeabgabe an die Umgebung, abzukühlen.

Unter Umständen kann es auch einfacher sein, das Rohr 10 zu kühlen, die Laschenkette 30 zu verspannen und anschliessend das Rohr 10 sich wieder auf die Umgebungstemperatur erwärmen zu lassen. Eine andere Möglichkeit, das Verspannen mit geringem Kraftaufwand zu erzeugen, besteht im Verspannen der Laschenkette 30 bei gleicher Temperatur von Rohr 10 und Laschenkette 30, gefolgt von einer Erwärmung und nachträglicher Kühlung des Rohres 10. Es ist ferner denkbar, die Laschenkette 30 und das Rohr 10 aus Materialien herzustellen, die verschiedene Wärmedehnungskoeffizienten aufweisen, wobei zum Erzeugen der gewünschten Druckspannungen beide - nach dem Verspannen der Laschenkette 30 bei gleicher Temperatur - zusammen gekühlt oder erwärmt werden, je nachdem wie die jeweiligen Wärmedehnungskoeffizienten zueinander abgestuft sind. Das optimale Verfahren zum Verspannen der Laschenkette 30 kann von Fall zu Fall in Abhängigkeit der jeweils herrschenden Bedingungen ermittelt werden. Diese Wahl liegt im Ermessen des Anwenders, wobei die einzelnen Verfahren in ihrer Wirkung äquivalent sind.

Die notwendigen mechanischen Druckspannungen können aber auch allein durch das Drehen eines der Zapfen 33 erzeugt werden, wobei die notwendigen Drehmomente, die auf den Zapfen 33 zu übertragen sind, z.B. hydraulisch erzeugt werden können. Gutes Schmieren des Zapfens 33 ist empfehlenswert.

Die Erfindung umfasst auch Ausführungsformen, bei denen, anstelle der Befestigungsschweissnähte 35', z.B. Stifte oder Schrauben für das Befestigen der Fixierscheiben 36 verwendet werden. Im Falle, dass selbsthemmende Exzenter eingesetzt werden, kann auf ein zusätzliches Fixieren der Exzenterstellung ganz verzichtet werden. Es ist auch möglich, mindestens den Zapfen 33, der zum Erzeugen der endgültigen Druckspannungen dient, so zu gestalten, dass er einstückig mit einem Hebel versehen ist, um ein Uebertragen von grossen Drehmomenten zu ermöglichen. Auch ein Anordnen von Wälzlagern, z.B. Nadellagern, zwischen diesen Zapfen 33 und den Laschen 31, 32 ist möglich, um die Reibung zu vermindern.

Das erfindungsgemässe Verfahren ist auch auf andere als rohrförmige, zylindrische Hohlkörper anwendbar, wie z.B. auf Gehäuse von Maschinen, sowie auf Hohlkörper mit Schweissnähten, die sich nur über einen Teil des Umfangs erstrecken.

## Ansprüche

1. Verfahren zum Herabsetzen von Restspannungen in einer Schweissnaht und in der während des Schweissens thermisch beanspruchten Zone eines metallischen Hohlkörpers durch Erzeugen von mechanischen Druckspannungen in dieser Zone mit Hilfe eines den Hohlkörper umspannenden Ringes, wobei die erzeugten Druckspannungen kleiner als die Druck-Bruchfestigkeit der thermisch beanspruchten Zone sind, jedoch eine Verformung über die Streckgrenze hinaus bewirken, dadurch **gekennzeichnet**, dass die Druckspannungen durch Verspannen einer den Hohlkörper umgreifenden, ringartigen Laschenkette erzeugt werden, wobei mindestens ein Zapfen der Laschenkette einen Exzenter aufweist, an dem mindestens eine der den Zapfen umfassenden Laschen verankert ist.

2. Verfahren nach Anspruch 1, dadurch gekennzeichnet, dass die Laschenkette mit einer höheren Temperatur als diejenige, die der Hohlkörper aufweist, auf diesen aufgebracht wird.

3. Verfahren nach Anspruch 1, dadurch gekennzeichnet, dass beim Verspannen der Laschenkette um den Hohlkörper beide etwa gleiche Temperatur aufweisen und dass nach dem Verspannen der Hohlkörper erwärmt wird.

4. Verfahren nach Anspruch 1, dadurch gekennzeichnet, dass die Laschenkette aus einem Material mit einem grösseren Wärmedehnungskoeffizienten als derjenige des Materials des Hohlkörpers besteht, dass beim Verspannen der Laschenkette um den Hohlkörper beide etwa gleiche Temperatur aufweisen und dass nach dem Verspannen der Laschenkette diese und der Hohlkörper zusammen gekühlt werden.

5. Verfahren nach Anspruch 1, dadurch gekennzeichnet, dass die Laschenkette aus einem Material mit einem kleineren Wärmedehnungskoeffizienten als derjenige des Materials des Hohlkörpers besteht, dass beim Verspannen der Laschenkette um den Hohlkörper beide etwa gleiche Temperatur aufweisen und dass nach dem Verspannen der Laschenkette diese und der Hohlkörper zusammen erwärmt werden.

6. Verfahren nach einem der Ansprüche 1 bis 5, dadurch gekennzeichnet, dass zwischen der Laschenkette und dem Hohlkörper der Form des Hohlkörpers angepasste Zwischenstücke eingeklemmt werden.

# Fig.1

# Fig.2

# Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A- 282 734 (WAGGONFABRIK VERDINGEN) <br> * Seite 5, Zeile 24 - Seite 6, Zeile 2; Seite 6, Zeile 25 - Seite 7, Zeile 8; Seite 10, Zeile 31 - Seite 11,, Zeile 10; Abbildungen 2,6 * <br> --- | 1-6 | F 16 L 13/06 |
| Y | EP-A-0 151 670 (GEBRÜDER SULZER AG) <br> * Seite 1, Zeile 5 - Seite 2, Zeile 7; Seite 6, Zeilen 15-32; Seite 8, Zeile 22 - Seite 11, Zeile 14; Seite 13, Zeilen 1-6; Abbildungen 1,4,5 * <br> ----- | 1-6 | |

RECHERCHIERTE SACHGEBIETE (Int. Cl.4)

B 23 K
F 16 L

Der vorliegende Recherchenbericht wurde für alle Patentansprüche erstellt

| Recherchenort | Abschlußdatum der Recherche | Prüfer |
|---|---|---|
| DEN HAAG | 12-07-1988 | ARAN D.D. |

EPO FORM 1503 03.82 (P0403)